Europäisches Patentamt

European Patent Office

Office européen des brevets

(11) Numéro de publication : **0 521 797 A1**

(12) **DEMANDE DE BREVET EUROPEEN**

(21) Numéro de dépôt : **92401920.1**

(22) Date de dépôt : **03.07.92**

(51) Int. Cl.⁵ : **G02F 1/313, G02B 6/12**

(30) Priorité : **05.07.91 FR 9108449**

(43) Date de publication de la demande :
**07.01.93 Bulletin 93/01**

(84) Etats contractants désignés :
**AT BE CH DE ES FR GB IT LI NL SE**

(71) Demandeur : **ALCATEL N.V.**
**Strawinskylaan 341**
**NL-1077 XX Amsterdam (NL)**

(72) Inventeur : **Duchet, Christian**
**76, rue Alfred Dubois**
**F-91460 Marcoussis (FR)**
Inventeur : **Brot, Christian**
**26, rue du 8 Mai 1945**
**F-91310 Leuville-sur-Orge (FR)**
Inventeur : **Samso, Sandrine**
**5, rue de Chevry**
**F-91190 Gif-sur-Yvette (FR)**
Inventeur : **Sarrabay, Laurence**
**1, résidence Louis Babin**
**F-91180 Saint Germain les Arpajon (FR)**

(74) Mandataire : **Bourely, Paul et al**
**SOSPI 14-16, rue de la Baume**
**F-75008 Paris (FR)**

(54) **Commutateur optique à commande électrique.**

(57) Ce commutateur comporte deux guides de sortie (G2, G3) monomodaux raccordés par un coupleur en Y (5) à un guide commun (G1) sur un substrat électro-optique (2). Des électrodes (6, 8, 10) sont alimentées par une source (12) pour commander la différence entre des indices effectifs de ces deux guides de sortie et diriger ainsi la lumière du guide commun soit vers un guide de sortie soit vers l'autre. L'un de ces guides de sortie (G2) présente une largeur plus grande que l'autre (G3) pour recevoir seul cette lumière lorsqu'aucun champ électrique n'est appliqué.

L'invention s'applique notamment dans les systèmes de télécommunications à fibres optiques.

FIG.2

La présente invention concerne un commutateur optique du type dit "à seuil" ou "numérique". De tels commutateurs trouvent application dans des systèmes de télécommunication à fibres optiques pour y constituer des points de branchement actifs.

La réalisation de tels points de branchement sur une ligne à fibre optique nécessite que les commutateurs utilisés aient un fonctionnement rapide et indépendant de la polarisation de la lumière qui les traverse.

Des commutateurs connus symétriques "à seuil" à guide d'entrée unique et monomodal comportent deux guides de sortie monomodaux raccordés au guide d'entrée sur un substrat électro-optique en formant un coupleur en Y. Des électrodes sont formées sur ce substrat pour appliquer des champs électriques de commande à ce coupleur. Ces champs modifient des indices de réfraction internes de ces guides de manière que la lumière qui arrive au coupleur en Y par le guide d'entrée se dirige soit vers l'un soit vers l'autre des deux guides de sortie.

De tels commutateurs symétrique ont une structure de sortie symétrique. Ils ont des guides de sortie identiques (donc de même largeur), et se comportent en l'absence de champ électrique comme des coupleurs 3 dB c'est-à-dire que la lumière se partage également entre les deux guides de sortie. Un tel commutateur symétrique est décrit dans un article de P. GRANESTRAND et al., Elec. Letters, 26,4 (1990).

Avec un tel commutateur symétrique, il faut toujours appliquer une tension électrique (non nulle) pour obtenir un état commuté, c'est-à-dire pour que toute la lumière sorte sur un seul des guides de sortie. Au contraire des commutateurs dissymétriques permettent d'obtenir un tel état en l'absence de toute tension électrique.

Un premier commutateur dissymétrique connu est décrit dans un document (US-A-3 920 314 - H.YAJIMA. Ce commutateur électro-optique comporte deux guides de sortie présentant des indices de réfraction effectifs différents pour que l'un des ces guides reçoive toute la lumière d'entrée en l'absence de toute commande électrique. Des électrodes sont prévues (figure 6) pour faire varier l'un de de ces indices de manière à faire passer la lumière dans l'autre guide de sortie. Cette variation d'indice effectif est obtenue par application d'un champ électrique à un matériau de confinement optique environnant les guides. La réalisation de ce commutateur est complexe.

Un deuxième commutateur dissymétrique est connu par un document FURUKAWA (EP-A-0 367 682 - THE FURUKAWA ELECTRIC). En l'absence de commande électrique toute la lumière d'entrée est reçue par un seul des deux guides de sortie de ce commutateur. En présence d'une telle commande cette lumière est reçue par l'autre guide de sortie grâce à une variation d'indice de réfraction. Cette variation est obtenue par l'injection d'un courant électrique, les guides étant réalisés dans un matériau semiconducteur. La consommation d'énergie de ce deuxième commutateur est gênante.

On connait par ailleurs, par un document BELL (WO-A-8 906 813 - BELL COMMS. RESEARCH), une jonction de guides d'ondes. Plusieurs guides d'ondes de sortie ont des indices de réfraction effectifs différents pour recevoir sélectivement plusieurs modes lumineux guidés par un guide d'entrée. Cette jonction est prévue pour assurer un tri entre des modes lumineux d'entrée divers mais non pour une commutation à cadence élevée.

La présente invention a notamment pour but de permettre la réalisation simple d'un commutateur optique apte à fonctionner à cadence élevée avec une faible consommation d'énergie et grâce auquel un état commuté est obtenu pour une tension nulle.

A l'aide des figures schématiques ci-jointes, on va décrire plus particulièrement ci-après, à titre d'exemple non limitatif, comment la présente invention peut être mise en oeuvre. Lorsqu'un même élément est représenté sur plusieurs figures il y est désigné par le même signe de référence.

La figure 1 représente une vue de dessus du substrat d'un premier commutateur réalisé selon la présente invention, sans ses électrodes.

La figure 2 représente une vue de dessus de ce commutateur avec ses électrodes.

La figure 3 représente une vue de dessus d'un deuxième commutateur selon la présente invention.

La figure 4 représente une vue de dessus d'un troisième commutateur selon la présente invention, sans ses électrodes.

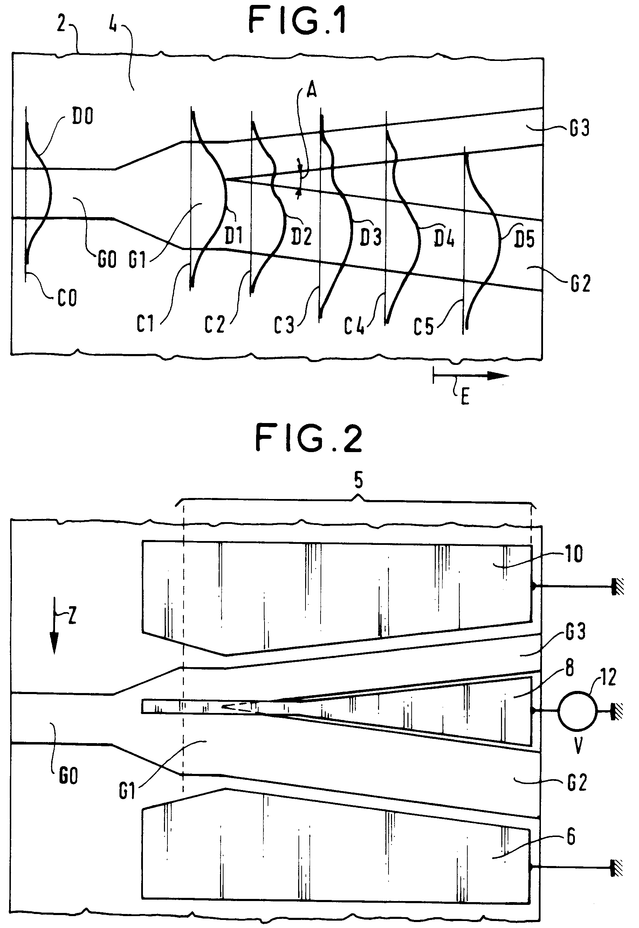

En se referant aux figures 1 et 2 à titre d'illustration on va maintenant indiquer certaines dispositions qui sont communes aux commutateurs connus précédemment mentionnés et aux commutateurs selon la présente invention. Chacune de ces dispositions sera décrite d'abord de manière générale puis de manière plus particulière à titre d'exemple.

Conformément à une telle disposition commune le premier commutateur selon la présente invention comporte :

- un substrat électro-optique 2 présentant une face supérieure 4 et constitué d'un matériau électro-optique dont un indice de réfraction peut être soit un indice de repos en l'absence de champ électrique, soit, en présence d'un champ électrique de commande, un indice commandé par ce champ et augmenté ou diminué par rapport à cet indice de repos.

Ce substrat est par exemple constitué d'une plaque horizontale d'un cristal tel que le niobate de lithium. Il présente un axe d'interaction électro-optique qui est généralement désigné par la lettre Z et qui est orienté selon une direction horizontale transversale dans le premier commutateur donné en exemple. Les champs électriques de commande sont orientés selon cet axe dans un sens ou dans l'autre selon que l'on veut augmenter ou diminuer l'indice de réfraction du matériau électro-optique.

Conformément à ces dispositions communes, des guides de lumière G1, G2 et G3 sont formés dans la face supérieure 4. Dans chacun de ces guides l'indice de réfraction du matériau électro-optique est un indice interne. Il est "de repos" ou "commandé" selon qu'un champ électrique de commande est absent ou présent, respectivement. L'indice interne de repos est plus grand qu'un indice externe qui est l'indice de repos de ce matériau en dehors de ces guides. Pour des champs électriques usuels l'indice interne commandé est lui aussi plus grand que l'indice externe.

Les dimensions transversales de certains de ces guides, à savoir des guides G2 et G3, sont choisies pour guider un seul mode de propagation d'une lumière guidée qui traverse ce commutateur. Cette lumière guidée présente par exemple une longueur d'onde 1 = 1,3 micromètre.

On peut définir, pour chacun de ces guides, un indice effectif qui dépend notamment de ses dimensions transversales tout en restant intermédiaire entre son indice interne et l'indice externe. Cet indice effectif est égal au rapport de la vitesse de la lumière dans le vide à la vitesse de la lumière guidée dans ce guide. Il est dit "de repos" ou "commandé" selon l'absence ou la présence d'un champ électrique de commande. Il augmente lorsque les dimensions transversales augmentent. Les guides sont par exemple formé par diffusion à partir d'une couche superficielle de titane suivant des conditions bien connues (voir chapitre 4 "Titanium-Diffused Lithium Niobate Waveguide Devices" du livre "Guided Wave Optoelectronics" Collection Springer-Verlag).

Pour des raisons de facilité de fabrication, ces guides sont réalisés à partir d'une même épaisseur de la couche de titane. Il en résulte que les indices effectifs dépendent seulement des largeurs des guides et des champs électriques de commande qui leur sont appliqués.

Selon une dite disposition commune ces guides de lumière forment :

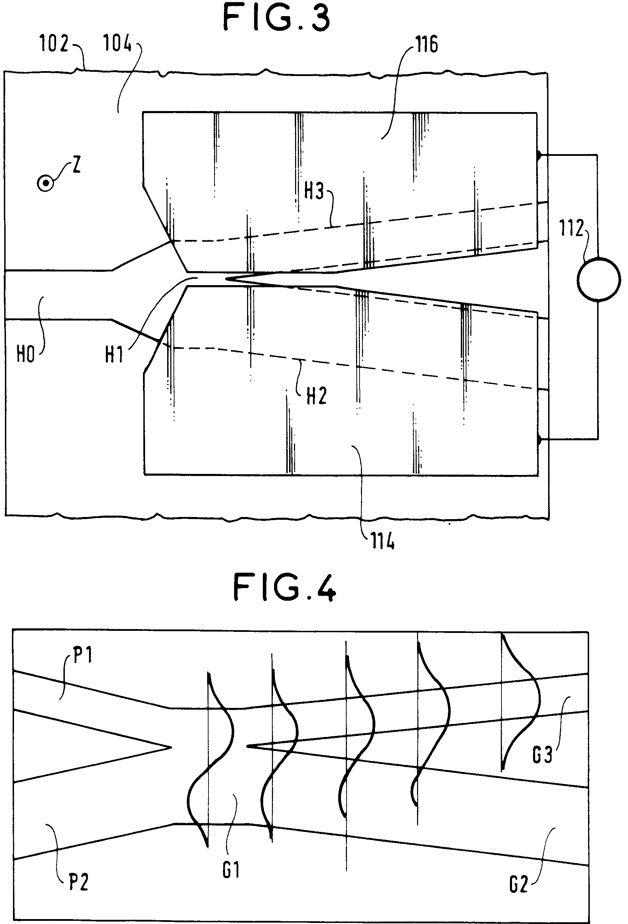

- un guide commun G1 présentant une direction d'entrée de coupleur pour recevoir et guider une onde d'entrée de coupleur constituée de ladite lumière guidée,
- et un premier G2 et un deuxième G3 guides de sortie. Ces derniers présentent une première et une deuxième direction de sortie faiblement inclinées sur la direction d'entrée de coupleur . Il se raccordent par un coupleur en Y 5 au guide commun de manière que chacun de ces guides de sortie puisse recevoir et guider une fraction de la lumière de ladite onde d'entrée de coupleur et que cette lumière se dirige préférentiellement vers celui de ces guides dont l'indice effectif est le plus grand quand l'onde d'entrée présente le mode fondamental (figure 1). Lorsque l'onde d'entrée présente le premier mode antisymétrique, la lumière ressort préférentiellement par le guide de sortie dont l'indice effectif est le plus petit (figure 4).

Le fonctionnement d'un coupleur passif présentant deux tels guides de sortie est décrit dans un article de W.K.BURNS, A.F. MILTON, IEEE J. Quant. Elec., 16, n°4 Avril 1980.

Les deux directions de sortie font par exemple un angle A = 0,1 degré et sont symétriques par rapport au prolongement de la direction d'entrée. De manière générale il convient qu'un paramètre F soit supérieur et de préférence très supérieur à un seuil $F_o$ = 0,43. Dans le cas simple de guides à saut d'indice ce paramètre peut être défini comme suit :

$$F = 2pi(ne2 - ne3) d/ (A.l)$$

ne2 et ne3 étant des indices effectifs de repos des guides G2 et G3 ne2 étant le plus grand, d étant la distance de pénétration de l'onde évanescente de la lumière guidée à partir du guide dans le matériau électro-optique environnant, cette distance étant exprimée en micromètres, A étant l'angle formé entre les deux guides de sortie, exprimé en radians, l étant la longueur d'onde de la lumière guidée en micromètres.

Selon une autre dite disposition commune, des électrodes 6, 8 et 10 permettent d'appliquer sélectivement desdits champs électriques de commande à ces premier et deuxième guides de sortie de manière à commander une augmentation relative de l'indice effectif de l'un de ces guides de sortie qui est choisi pour recevoir et guider ladite lumière, cette augmentation étant relative par rapport à l'indice effectif de l'autre guide de sortie qui n'est pas choisi.

Cette augmentation relative est avantageusement réalisée par une augmentation absolue de l'un des indices effectifs et par une diminution absolue simultanée de l'autre. Pour cela, par exemple, dans le cas du premier commutateur donné en exemple, on relie à la masse les électrodes latérales 6 et 10 qui sont déposées extérieurement par rapport à l'ensemble des deux guides G2 et G3, et on alimente par une source de commande 12 l'électrode centrale 8 qui est déposée entre ces deux guides.

Selon maintenant une disposition propre à la présente invention, le premier guide de sortie G2 présente un indice effectif de repos ne2 suffisamment supérieur à l'indice effectif de repos ne3 du deuxième guide de sortie G3 pour que toute la lumière du guide commun soit reçue et guidée par un seul guide de sortie en l'absence de tout champ électrique de commande, ce guide de sortie étant le premier ou le deuxième selon que le mode de propagation de la lumière dans le guide commun G1 est le mode fondamental ou le premier mode antisymétrique, respectivement.

Cette différence des indices effectifs de repos résulte de préférence seulement du fait que la largeur du guide G2 est supérieure à celle du guide G3. Ces largeurs sont par exemple de 7 et 8 micromètres, respectivement. Cette différence est suffisamment importante pour que la condition sur F soit respectée (avec A=0,1°) et ces largeurs sont suffisamment petite pour que les guides soient monomodes.

Le guide commun G1 du coupleur en Y peut être connecté à un seul guide monomode G0 qui constitue le guide d'entrée d'un commutateur 1 X 2, (Figure 1). Il peut aussi être connecté à deux guides passifs monomodes et dissymétrique (P1 et P2) pour former deux guides d'entrée d'un commutateur 2 X 2 (figure 4).

Dans le cas d'un commutateur comportant un seul guide d'entrée G0 monomode, la figure 1 montre une succesion de diagrammes D0....D5 représentatifs des amplitudes du mode fondamental de l'onde formée par la lumière guidée. Ces amplitudes sont portées parallèlement à un axe E à partir d'axes de coupes C0,...C5 propres chacun à l'un de ces diagrammes. Ces axes de coupes passent par les points où ces amplitudes se manifestent. Chaque amplitude est portée parallélement à l'axe E à partir du point où elle se manifeste. Ces diagrammes correspondent au cas où aucun champ électrique de commande n'est appliqué.

Il apparaît que l'énergie de l'onde lumineuse se rassemble progressivement dans le guide G2.

Dans le cas (figure 2) où une tension électrique (100 volts par exemple) est appliquée par la source 12, celle-ci inverse l'ordre des indices effectifs, les diagrammes représentatifs d'amplitude sont inversés entre les deux branches de sortie du coupleur. Ils font alors apparaître un rassemblement de cette énergie dans le guide G3. Un commutateur 1 X 2 est donc réalisé qui présente, pour une tension nulle, un état commuté prédéterminé.

Le deuxième commutateur 1 X 2 (figure 3) donné en exemple est généralement analogue au premier .

Son substrat 102 présente un axe d'interaction électro-optique Z vertical. Ses guides H0, H1, H2 et H3 sont identiques aux guide G0, G1 G2 et G3.

Ses deux électrodes de commandes 114 et 116 recouvrent respectivement les guides de sortie H2 et H3 pour y appliquer des champs électriques vertiaux de sens opposés. Elle sont connectées aux deux bornes d'une source de commande 112.

Un troisième commutateur (figure 5) donné en exemple est généralement analogue au premier mais comporte deux guides d'entrée dissymétriques passifs P1 et P2 pour constituer un commutateur 2 X 2.

## Revendications

1/ Commutateur optique à commande électrique, notamment pour réseau de télécommunications, comportant deux guides de sortie (G2, G3) monomodaux raccordés par un coupleur en Y (5) à un guide commun (G1), ces guides étant formés dans un matériau électro-optique (2), ce commutateur comportant en outre des électrodes (6, 8, 10) pour commander une différence entre les indices effectifs de ces deux guides de sortie, et étant caractérisé par le fait que ces deux guides de sortie (G2, G3) présentent des indices effectifs (ne2, ne3) différents en l'absence de champ électrique.

2/ Commutateur selon la revendication 1, comportant :

- un substrat (2) présentant une face supérieure (4) et constitué d'un matériau électro-optique dont un indice de réfraction peut être soit un indice de repos en l'absence de champ électrique, soit, un indice commandé en présence d'un champ électrique de commande orienté selon un axe d'interaction électro-optique (Z) de ce matériau, cet indice commandé étant augmenté ou diminué par rapport à cet indice de repos,

- et des guides de lumière (G1, G2, G3) qui sont formés au sein dudit matériau électro-optique dans l'étendue de cette face supérieure (4) et dans chacun desquels l'indice de réfraction dudit matériau électro-optique est un indice interne de repos ou commandé selon qu'un dit champ électrique de commande y est absent ou présent, respectivement, cet indice interne de repos étant plus grand qu'un indice externe qui est l'indice de repos de ce matériau en dehors de ces guides, chacun de ces guides ayant un indice effectif qui dépend notamment de ses dimensions transversales tout en restant intermédiaire entre son dit indice interne et ledit indice externe, cet indice effectif étant égal au rapport de la vitesse de la lumière dans le vide à la vitesse de ladite lumière guidée dans ce guide et étant de repos ou commandé selon l'absence ou la présence d'un dit champ électrique de commande,

ces guides de lumière formant :

- un guide commun (G1) présentant une direction d'entrée de coupleur pour recevoir et guider une onde d'entrée constituée de ladite lumière guidée,

- et un premier (G2) et un deuxième (G3) guides de sortie présentant des dimensions transversales tendant à imposer une propagation monomodale à la lumière, ces guides s'étendant selon une première et une deuxième directions de sortie faiblement inclinées sur ladite direction d'entrée de coupleur et se raccordant par un coupleur en Y (5) audit guide commun de manière que chacun de ces guides de sortie puisse recevoir et guider une fraction de la lumière d'entrée et que cette lumière se dirige préférentiellement vers celui de ces guides dont l'indice effectif est le plus grand ou le plus petit selon que la lumière se propage dans le guide commun selon le mode fondamental ou le premier mode antissymétrique, respectivement,

- ledit commutateur comportant encore des électrodes (6, 8, 10) pour appliquer sélectivement desdits champs électriques de commande à ces premier et deuxième guides de sortie de manière à commander une augmentation relative de l'indice effectif de l'un de ces guides de sortie, cette augmentation étant relative par rapport à l'indice effectif de l'autre guide de sortie,
- ledit commutateur étant caractérisé par le fait que ledit premier guide de sortie (G2) présente un indice effectif de repos (ne2) suffisamment supérieur à l'indice effectif de repos (ne3) dudit deuxième guide de sortie (G3) pour que toute la lumière de ladite onde d'entrée soit reçue et guidée par un seul de ces deux guides de sortie en l'absence de tout dit champ électrique de commande.

3/ Commutateur selon la revendication 2, caractérisé par le fait que ledit premier guide de sortie (G2) présente une largeur supérieure à celle dudit deuxième guide de sortie (G3).

# FIG.1

# FIG.2

# FIG.3

# FIG.4

Office européen
des brevets

**RAPPORT DE RECHERCHE EUROPEENNE**

Numero de la demande

EP 92 40 1920

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X,D | WO-A-8 906 813 (BELL COMMS. RESEARCH)<br>* page 1, ligne 33 - page 3, ligne 37 *<br>* page 6, ligne 2 - page 7, ligne 24 *<br>* revendications 1-16; figures 1,5 *<br>--- | 1-3 | G02F1/313<br>G02B6/12 |
| X,D | US-A-3 920 314 (H. YAJIMA)<br>* abrégé *<br>* colonne 3, ligne 6 - colonne 4, ligne 2 *<br><br>* colonne 5, ligne 25 - ligne 37 *<br>* colonne 8, ligne 67 - colonne 9, ligne 1 *<br><br>* revendications 1-3; figure 1 * | 1 | |
| A | idem<br>--- | 3 | |
| A,D | APPLIED PHYSICS LETTERS.<br>vol. 51, no. 16, Octobre 1987, NEW YORK US<br>pages 1230 - 1232<br>Y. SILBERBERG ET AL. 'Digital optical switch'<br>* figure 1 *<br>--- | 2 | |
| A,D | EP-A-0 367 682 (THE FURUKAWA ELECTRIC)<br>* abrégé *<br>* colonne 10, ligne 8 - colonne 11, ligne 9 *<br>* revendications 1,3; figure 5 *<br><br>----- | 1,3 | **DOMAINES TECHNIQUES RECHERCHES (Int. Cl.5 )**<br><br>G02F |

Le présent rapport a été établi pour toutes les revendications

| Lieu de la recherche | Date d'achèvement de la recherche | Examinateur |
|---|---|---|
| LA HAYE | 09 OCTOBRE 1992 | IASEVOLI R. |

EPO FORM 1503 03.82 (P0402)